# EUROPÄISCHE PATENTSCHRIFT

(11) **EP 3 851 892 B1**
(45) Veröffentlichungstag und Bekanntmachung des Hinweises auf die Patenterteilung: **08.10.2025**
(21) Anmeldenummer: 20152575.5
(22) Anmeldetag: 20.01.2020
(51) Int. Cl.: G02B 7/00, G02B 6/42, G02B 7/02, G02B 7/08, G02B 23/24

(54) **AKTUIERBARE OPTISCHE VORRICHTUNG, VERFAHREN ZUR HERSTELLUNG DER VORRICHTUNG, UND VERWENDUNG EINER MAGNETISCHEN SUBSTANZ**
ACTUATABLE OPTICAL DEVICE, METHOD FOR PRODUCING THE DEVICE, AND USE OF A MAGNETIC SUBSTANCE
DISPOSITIF OPTIQUE ACTIONNABLE, PROCÉDÉ DE FABRICATION DE DISPOSITIF ET UTILISATION D'UNE SUBSTANCE MAGNÉTIQUE

(43) Veröffentlichungstag der Anmeldung: 21.07.2021
(73) Patentinhaber: Baden-Württemberg Stiftung gGmbH, 70174 Stuttgart (DE)
(72) Erfinder: Thiele, Simon, 70372 Stuttgart (DE); Jung, Chris, 78239 Rielasingen-Worblingen (DE); Giessen, Harald, 67297 Marnheim (DE); Herkommer, Alois M., 73431 Aalen (DE)
(74) Vertreter: Müller-Boré & Partner Patentanwälte PartG mbB

(56) Entgegenhaltungen:
- WO-A1-2017/052769
- US-A1- 2006 153 556
- CAO GUANGYI ET AL: "Real-time vertical/horizontal section imaging and 3D image construction using a 3-axis electromagnetic confocal microscanner", 2017 19TH INTERNATIONAL CONFERENCE ON SOLID-STATE SENSORS, ACTUATORS AND MICROSYSTEMS (TRANSDUCERS), IEEE, 18 June 2017 (2017-06-18), pages 254 - 257, XP033130702, DOI: 10.1109/TRANSDUCERS.2017.7994036
- SAVAS JANSET ET AL: "Towards 3D printed confocal endoscopy", PROCEEDINGS OF SPIE; [PROCEEDINGS OF SPIE ISSN 0277-786X VOLUME 10524], SPIE, US, vol. 9948, 28 September 2016 (2016-09-28), pages 99480D - 99480D, XP060077873, ISBN: 978-1-5106-1533-5, DOI: 10.1117/12.2236641
- HENRY E WILLIAMS ET AL: "Fabrication of three-dimensional micro-photonic structures on the tip of optical fibers using SU-8", OPTICS EXPRESS, vol. 19, no. 23, 27 October 2011 (2011-10-27), pages 22910 - 22922, XP055337463, DOI: 10.1364/OE.19.022910

## Beschreibung

Die Erfindung betrifft eine 3D-gedruckte aktuierbare optische Vorrichtung, insbesondere eine 3D-gedruckte magnetisch aktuierbare Mikrooptik, sowie ein Verfahren zur Herstellung der aktuierbaren optischen Vorrichtung. Ferner betrifft die Erfindung die Verwendung eines Ferrofluids und/oder eines flüssigen magnetisierbaren Polymers zur Herstellung einer magnetisch aktuierbaren optischen Vorrichtung.

Die Druckschrift WO 2017/052769 A1 offenbart z.B. eine Autofokus-Vorrichtung und/oder eine Vorrichtung zur optischen Bildstabilisierung. Die Vorrichtung umfasst einen Magneten und ein Ferrofluid, das den Magneten umgibt. Ferner umfasst die Vorrichtung eine Spule, die in der Nähe des Ferrofluids angeordnet ist. Mit Hilfe eines Stroms durch die Spule kann eine Linse durch den Magneten und das Ferrofluid verschoben werden. Des Weiteren offenbart beispielsweise die Druckschrift US 2006/153556 A1 eine Vorrichtung zur Brennweiteneinstellung, bei der ein Dämpfungsmittel zwischen einem Magneten und einer Spule angeordnet ist. Um eine Verbesserung der magnetischen Flussdichte zu erreichen, wird vorgeschlagen, ein viskoses magnetisches Fluid als Dämpfungsmittel zu verwenden.

In den letzten Jahren haben sich additive Fertigungsverfahren als geeignete Technologie zur Herstellung von optischen Elementen bzw. optischen Systemen etablieren können. 3D-Drucker wie sie unter anderem von der Nanoscribe GmbH hergestellt werden, ermöglichen es, hochwertige Mikrooptiken zu produzieren. Dadurch können z.B. Objektive mit mehreren Linsenelementen auf der Submillimeterskala gedruckt werden. Aufgrund des einheitlichen Schreibprozesses sind die Linsen bereits entlang einer optischen Achse zueinander ausgerichtet und es sind keine zusätzlichen Justageschritte notwendig.

Viele makroskopische Objektive haben bewegliche Komponenten. Dadurch erlangen Objektive unter anderem die Möglichkeit, ihren Fokus zu variieren oder ihre Vergrößerung zu verändern (Zoomsysteme). Bewegliche Komponenten wie verstellbare Lamellen ermöglichen außerdem variierbare Blendendurchmesser. Lösungen für optische Vorrichtungen mit beweglichen Optikkomponenten gibt es bisher nur für Optikkomponenten mit einem Durchmesser größer als 1 mm. Diese Lösungen können aufgrund ungünstiger Skalierungseffekte nicht ohne weiteres auf mikroskopische optische Vorrichtungen, welche Optikkomponenten mit einem Durchmesser kleiner als 1 mm oder kleiner als 500 µm aufweisen, übertragen werden. Insbesondere 3D-gedruckte Mikrooptiken können z.B. Durchmesser im Bereich von nur 100 µm aufweisen. Aufgrund dieser kleinen Dimensionen ist es jedoch nicht möglich, herkömmliche makroskopische Antriebe auf Mikrolinsensysteme zu übertragen. Somit ist es auf mikroskopischer Ebene (d.h. auf der Submillimeter-Skala) eine große technische Herausforderung bzw. Hürde, eine optische Vorrichtung mit beweglichen Komponenten zu realisieren oder z.B. ganze Linsengruppen von Mikroobjektiven beweglich zu gestalten.

Es ist daher eine Aufgabe der vorliegenden Erfindung, eine aktuierbare optische Vorrichtung bereitzustellen, welche effizient, kompakt und insbesondere auf der Submillimeterskala (Durchmesser kleiner als 1 mm, vorzugsweise kleiner als 500 µm) realisierbar ist. Ferner ist es eine Aufgabe der vorliegenden Erfindung, ein Verfahren zur Herstellung einer solchen aktuierbaren optischen Vorrichtung bereitzustellen. Diese Aufgaben werden durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft ein Verfahren zur Herstellung einer aktuierbaren (bzw. variablen oder aktiven) optischen Vorrichtung, umfassend die Schritte:
- Ausbilden einer dreidimensionalen Struktur der optischen Vorrichtung mit Hilfe eines 3D-Druckers derart, dass die dreidimensionale Struktur (50) aufweist:
   -- zumindest ein optisches Element, und
   -- zumindest eine mikrofluidische Kavität zur Aufnahme einer magnetischen Substanz;
- Befüllen der zumindest einen mikrofluidischen Kavität mit der magnetischen Substanz;
wobei die dreidimensionale Struktur auf ein Ende einer Faser oder eines Faserbündels gedruckt wird, wobei die dreidimensionale Struktur ferner eine Mikrospule aufweist, und wobei die Mikrospule derart angeordnet ist, dass sie zumindest bereichsweise die Faser oder das Faserbündel umschließt.

Eine optische Vorrichtung kann z.B. eine Blende, eine Einzellinse oder ein Linsensystem umfassen. Vorzugsweise weist die optische Vorrichtung Abmessungen bzw. Dimensionen im Submillimeterbereich auf. Insbesondere ist der Durchmesser des zumindest einen optischen Elements der optischen Vorrichtung kleiner als 1 mm und vorzugsweise kleiner als 500 µm. Die optische Vorrichtung kann also insbesondere eine mikroskopische optische Vorrichtung bzw. eine Mikrooptik sein. Entsprechend kann das zumindest eine optische Element eine Mikrolinse, ein Mikroobjektiv, ein refraktives oder diffraktives Mikroelement, ein Mikrospiegel, ein Mikroprisma, ein Mikrolinsen-Array, eine Mikro-Totalreflexions-Struktur und/oder eine mikroskopische Meta-Oberfläche sein. Insbesondere kann die optische Vorrichtung ein System aus zwei oder mehreren Linsen bzw. Mikrolinsen, welche relativ zueinander beweglich sind, sein. Die optische Vorrichtung kann z.B. auch ein System aus zwei optischen Komponenten bzw. optischen Elementen (insbesondere Linsen), die zueinander ausgerichtet werden sollen, sein.

Unter einem optischen Element wird im Sinne dieser Beschreibung allgemein ein Element oder Bauteil mit bestimmten bzw. vorgegebenen optischen Eigenschaften, wie z.B. eine Linse und/oder eine Blende etc., verstanden. Das optische Element kann Abmessungen bzw. Ausdehnungen im Mikrometerbereich, d.h. Abmessungen kleiner als 1 mm, beispielsweise kleiner als 500 µm und vorzugsweise kleiner als 300 µm aufweisen und daher auch als mikrooptisches Element bezeichnet werden. Beispielsweise kann ein mikrooptisches Element einen Durchmesser von etwa 10 µm bis 500 µm, insbesondere von etwa 120 µm, und eine Länge von etwa 100 µm bis 250 µm aufweisen. Das optische Element umfasst im Sinne dieser Beschreibung insbesondere eines oder mehrere der folgenden Elemente: eine Linse bzw. ein Linsen-Array, ein Objektiv, eine Blende, ein refraktives Element, ein diffraktives Element, einen Spiegel, eine Totalreflexions-Struktur, ein Prisma und/oder eine Meta-Oberfläche.

Unter einer "aktuierbaren optischen Vorrichtung" wird im Rahmen der vorliegenden Erfindung insbesondere eine Vorrichtung mit beweglichen, verstellbaren, verlagerbaren, ausrichtbaren, verkippbaren und/oder rotierbaren optischen Komponenten bzw. optischen Elementen verstanden. Eine aktuierbare optische Vorrichtung ist somit eine variable optische Vorrichtung oder eine sogenannte aktive optische Vorrichtung. Beispielsweise kann eine Brennweite und somit eine Vergrößerung des optischen Systems oder eine Blendenzahl variiert bzw. eingestellt werden. Die optische Vorrichtung ist somit eine steuerbare optische Vorrichtung.

Insbesondere kann die optische Vorrichtung bzw. das zumindest eine optische Elemente der optischen Vorrichtung mit Hilfe eines Magnetfelds aktuiert bzw. gesteuert werden, so dass es sich um eine magnetisch aktuierbare optische Vorrichtung handelt. Das Magnetfeld kann ein extern angelegtes Magnetfeld sein oder ein Magnetfeld, welches von der optischen Vorrichtung selbst bzw. von entsprechenden Komponenten der optischen Vorrichtung erzeugt wird. Das Magnetfeld ist insbesondere ein inhomogenes Magnetfeld, welches einen Magnetfeldgradienten aufweist.

In einem ersten Schritt des erfindungsgemäßen Verfahrens wird eine dreidimensionale Struktur oder Basis- bzw. Rohstruktur der optischen Vorrichtung mit Hilfe eines 3D-Druckers ausgebildet bzw. gedruckt. Zur Ausbildung dieser dreidimensionalen Struktur kann vorteilhafterweise ein für den jeweiligen 3D-Drucker optimal geeignetes Material verwendet werden. Im Falle eines stereolithographischen Verfahrens kann zur Ausbildung der dreidimensionalen Struktur des optischen Elements z.B. ein transparenter Fotolack verwendet werden. Im Falle des 3D-Druckers der Nanoscribe GmbH können beispielsweise die folgenden Fotolacke verwendet werden: Nanoscribe IP-S, Nanoscribe IP-Dip, und/oder Micro resist technology OrmoComp.

Bei der dreidimensionalen Struktur kann es sich insbesondere um eine mikroskalige bzw. mikrooptische Struktur, d.h. eine Struktur mit Abmessungen im Mikrometerbereich, handeln. Die dreidimensionale Struktur ist vorzugsweise transparent.

Die mit dem 3D-Drucker ausgebildete dreidimensionale Struktur weist zumindest eine mikrofluidische Kavität auf, welche sich zur Aufnahme einer magnetischen Substanz, insbesondere durch Ausnutzen von Kapillareffekten bzw. durch das Wirken von Kapillarkräften, eignet. Mit anderen Worten ist die zumindest eine mikrofluidische Kavität ausgelegt, eine magnetische Substanz, insbesondere mittels Kapillareffekt bzw. mittels Kapillarkräften, aufzunehmen.

Unter einer "mikrofluidischen Kavität" wird im Sinne dieser Beschreibung ein Hohlraum verstanden, welcher derart kleine Abmessungen aufweist, dass sich ein Fluid, insbesondere eine Flüssigkeit, mikrofluid verhält. Ein Fluid bzw. eine Flüssigkeit verhält sich mikrofluid, wenn es bei einem Kontakt mit der mikrofluidischen Kavität bzw. dem Hohlraum durch Eigenschaften bzw. Effekte, insbesondere Kapillareffekte bzw. Kapillarkräfte, dominiert wird, die in der klassischen Strömungslehre oft vernachlässigt werden können. Vorzugsweise wird die zumindest eine mikrofluidische Kavität derart ausgebildet, dass sie eine Abmessung bzw. Ausdehnung, d.h. eine Länge und/oder Breite, insbesondere Spaltbreite, und/oder einen Durchmesser, von weniger als 200 µm, vorzugsweise weniger als 150 µm, noch bevorzugter weniger als 100 µm und am bevorzugtesten weniger als 40 µm, insbesondere von weniger als 20 µm aufweist. Beispielsweise weist die zumindest eine mikrofluidische Kavität eine Abmessung bzw. Spaltbreite von etwa 10 µm bis 20 µm auf.

Vorteilhafterweise haben Kapillareffekte auf einer Größenskala von kleiner als 200 µm einen großen Einfluss und sorgen dafür, dass Flüssigkeiten zum Abbau von Oberflächenenergie direkt in mikrofluidische Kavitäten bzw. Hohlräume mit solchen Abmessungen einziehen.

In einem zweiten Schritt wird die zumindest eine mikrofluidische Kavität mit einer magnetischen Substanz befüllt. Der Begriff "Befüllen" umfasst im Sinne dieser Beschreibung ein teilweises oder vollständiges Befüllen. Bei einem teilweisen Befüllen wird zwar eine Bodenfläche der mikrofluidischen Kavität mit der magnetischen Substanz bedeckt bzw. benetzt, jedoch wird die Kavität bzw. der Hohlraum nicht vollständig mit der magnetischen Substanz gefüllt. Insbesondere kann die zumindest eine mikrofluidische Kavität zumindest teilweise befüllt, oder auch nur benetzt, werden. Das Befüllen der mikrofluidischen Kavität kann z.B. mit Hilfe eines hochpräzisen Tintenstrahldruckers ("Inkjet-Druckers") bzw. hochpräzisen Tintenstrahldruckprozesses, wie er auch in der Halbleitertechnik verwendet wird, um z.B. Leiterbahnen auf Platinen mit leitfähiger Tinte zu drucken, erfolgen.

Das Befüllen der zumindest einem mikrofluidischen Kavität umfasst vorzugsweise einen Beschuss der zumindest einen mikrofluidischen Kavität mit Mikrotröpfchen der magnetischen Substanz. Das Befüllen erfolgt vorzugsweise mit Hilfe einer Mikropipette, wobei die magnetische Substanz durch die Kapillarkraft aus der Mikropipette in die Kavität gezogen wird. Zusätzlich kann über eine in die Pipette eingebrachte Elektrode eine Spannung auf die magnetische Substanz gegeben werden. Dies erleichtert das Befüllen der Kavität.

Unter einer "magnetischen Substanz" wird eine Substanz verstanden, die von einem Magnetfeld beeinflusst werden kann bzw. die auf ein Magnetfeld reagiert. Insbesondere wird darunter eine Substanz verstanden, auf die, sofern sie einem Magnetfeld ausgesetzt wird, Kräfte wirken. Insbesondere ist die magnetische Substanz eine magnetisierbare Substanz. Vorzugsweise weist die magnetische Substanz eine Vielzahl von magnetischen bzw. magnetisierbaren Mikro- oder Nanopartikeln auf. Auf Grund ihrer Funktion, nämlich in Wechselwirkung mit einem Magnetfeld Kräfte zu erzeugen und somit eine Aktuation bzw. Bewegung des zumindest einen optischen Elements hervorzurufen, kann die magnetische Substanz auch als Aktuierungssubstanz oder Antriebssubstanz bezeichnet werden. Vorzugsweise weist die magnetische Substanz eine magnetische Anfangs-Suszeptibilität (bei SI-Einheiten) von mindestens 5 auf, besonders bevorzugt von mindestens 10 und am meisten bevorzugt von mindestens 20 Damit kann in Folge eines für den erfindungsgemäßen Zweck herkömmlich verfügbaren bzw. erzeugbaren Magnetfelds (z.B. im Milli-Tesla Bereich) eine ausreichende Kraft auf die magnetische Substanz zum Aktuieren der optischen Vorrichtung bzw. des zumindest einen optischen Elements generiert werden.

Die dreidimensionale Struktur wird mit Hilfe des 3D-Druckers auf Basis eines vorbestimmten oder vorgegebenen Layouts bzw. Designs ausgebildet bzw. gedruckt. Das Layout bzw. Design wird mittels einer zu dem 3D-Drucker zugehörigen Software erstellt und als Datei gespeichert. Diese Datei wird schließlich zu dem 3D-Drucker gesendet bzw. diesem zur Verfügung gestellt, so dass der 3D-Drucker auf Basis der Datei die gewünschte Struktur ausbilden bzw. drucken kann. Vorzugsweise umfasst somit der oben genannte erste Schritt ein Bereitstellen eines Layouts bzw. Designs des herzustellenden optischen Elements. Dabei weist das Layout zumindest ein optisches Element, eine mikrofluidische Kavität und eine Stelleinrichtung auf.

Die vorliegende Erfindung ermöglicht extrem kompakte aktuierbare Mikrooptiken, die durch ein äußeres Magnetfeld präzise und schnell gesteuert werden können. Die Funktionalität dieser Bauteile wird dadurch wesentlich erhöht. Möglich werden dadurch unter anderem Zoomsysteme, Schwenksysteme, fokussierbare Optiken, Kompensatorelemente oder auch variable Blenden. Auch für hochpräzises Alignment können diese Ansätze verwendet werden, z.B. indem eine optische Komponente mittels eines externen Magnetfelds gegenüber einer anderen Komponente hochpräzise ausgerichtet wird und beide miteinander verklebt werden, sobald eine perfekte Ausrichtung vorliegt. Ein Vorteil der magnetischen Aktuierung besteht insbesondere in der einfachen Umsetzung, sowie in der Möglichkeit, die optische Vorrichtung kontaktlos und auch über eine gewisse Entfernung zu steuern.

In einer bevorzugten Ausführungsform umfasst oder ist die magnetische Substanz ein Ferrofluid. Alternativ oder zusätzlich umfasst oder ist die magnetische Substanz ein flüssiges Polymer, welches magnetische und/oder magnetisierbare Mikro- oder Nanopartikel aufweist bzw. enthält.

Ferrofluide sind kolloide Suspensionen aus magnetischen Partikeln mit einer Größenordnung um 5-15 nm. In den meisten kommerziellen Ferrofluiden bestehen die darin enthaltenen Partikel aus Magnetit (Fe₃O₄). Diese sind in einer Trägerflüssigkeit dispergiert. Die Konzentration der magnetischen Partikel liegt in der Regel im Bereich von 7-10%. Je nach Anwendung werden unterschiedlichste Trägerflüssigkeiten für Ferrofluide verwendet. Herkömmliche Trägerflüssigkeiten sind z.B. mineralische Öle, Ester oder auch für medizinische Anwendungen Wasser. Um eine Agglomeration der magnetischen Partikel zu vermeiden, können diese eine Oberflächenbeschichtung aufweisen. Hierfür können z.B. langkettige Moleküle (z.B. Ölsäuren) verwendet werden, die aufgrund von sterischer Abstoßung dafür sorgen, dass die Partikel nicht agglomerieren. Ferrofluide enthalten ferromagnetische Partikel wie Magnetit. Diese Partikel haben trotz ihres geringen Durchmessers die gleiche Sättigungsmagnetisierung, also dieselbe maximale Magnetisierung des Materials wie in Festkörperform. Aufgrund des geringen Durchmessers der magnetischen Partikel von ca. 10 nm nimmt die Anzahl der Weiss'schen Bezirke pro Partikel ab bzw. beschränkt sich nur noch auf einen Bereich. Wird ein zuvor angelegtes Magnetfeld ausgeschalten, verlieren die Partikel ihre Magnetisierung. Dies hängt damit zusammen, dass die Ausrichtung der Partikel aufgrund von thermischen Bewegungen in dem Ferrofluid wieder zerstört wird. Deshalb werden Ferrofluide als superparamagnetisch kategorisiert.

Durch Anlegen eines äußeren Magnetfeldes kommt es zur magnetischen Relaxation der magnetischen Partikel im Ferrofluid. Bei einer Ausrichtung entlang eines Feldgradienten kommt es zur Magnetisierung des Ferrofluids. Die Art der Magnetisierung der Ferrofluide ist abhängig von der Viskosität des Trägermaterials, sowie von dem Partikeldurchmesser. Durch ein äußeres Magnetfeld kann eine Kraft auf das Ferrofluid ausgeübt werden. Eine entscheidende Eigenschaft von Ferrofluiden ist, dass diese innerhalb eines nicht-homogenen Magnetfelds am stärksten von der Region mit der größten Intensität angezogen werden. Da die Partikel sich in einen Zustand mit der kleinsten Energie begeben wollen, folgenden diese dem Magnetfeld und richten sich entsprechend parallel zu ihm aus. Die Kraft, die hierbei auf einen einzelnen Nanopartikel wirkt, ist abhängig von dessen Volumen sowie der Differenz zwischen der Suszeptibilität des Partikels und der Suszeptibilität des Mediums.

Beispielsweise kann das Ferrofluid mit der Bezeichnung EMG 900 von FerroTec, welches als Trägersubtanz Isoparaffin beinhaltet und eine kolloide Suspension mit Magnetit-Partikel bildet, für die vorliegende Erfindung eingesetzt werden. Es versteht sich, dass aber auch andere Ferrofluide, wie z.B. wasserbasierte Ferrofluide, verwendet werden können. Ein wasserbasiertes Ferrofluid ist z.B. das Ferrofluid mit der Bezeichnung EMG 601P von FerroTec.

Alternativ oder zusätzlich zum Ferrofluid kann ein mit magnetischen oder magnetisierbaren Mikropartikeln gefülltes flüssiges Polymer als magnetische Substanz verwendet werden. Das flüssige Polymer kann nach dem Befüllen ausgehärtet werden, z.B. durch die Verwendung von UV-Licht oder durch Wärmeeintrag. Beispielsweise können hierzu niederviskose 2-Komponenten-Epoxidharze und/oder niederviskose Photopolymere zum Einsatz kommen. Die Verwendung eines mit magnetischen oder magnetisierbaren Mikropartikeln gefüllten flüssigen Polymers bietet die Möglichkeit, die Partikel vor dem Aushärten in einem externen Magnetfeld auszurichten, so dass mit der Verfestigung der Substanz ein Permanentmagnet erzeugt wird. Alternativ dazu besteht die Möglichkeit, Partikel nach der Verfestigung der flüssigen Substanz in einem starken externen Magnetfeld zu magnetisieren.

In einer weiteren bevorzugten Ausführungsform weist die dreidimensionale Struktur der optischen Vorrichtung ferner eine Stelleinrichtung (auch als Stellelement oder Stellglied bezeichnet) zum Positionieren des zumindest einen optischen Elements auf. Unter "Positionieren" wird im Sinne der Erfindung verstanden, dass das zumindest eine optische Element in eine bestimmte Position oder Lage bzw. Ausrichtung gebracht wird. Mit anderen Worten dient die Stelleinrichtung zum Aktuieren, d.h. Bewegen (insbesondere Verlagern, Kippen und/oder Drehen), des zumindest einen optischen Elements. Der Begriff "Positionieren" umfasst somit im Sinne der vorliegenden Erfindung nicht nur ein translatorisches Verlagern, sondern auch ein Ausrichten, d.h. ein Drehen oder Verkippen. Die Stelleinrichtung kann auf Grund ihrer Funktion, nämlich das zumindest eine optische Element zu positionieren bzw. auszurichten, auch als Aktuatorelement bezeichnet werden.

Vorzugsweise sind das zumindest eine optische Element, die zumindest eine mikrofluidische Kavität und die zumindest eine Stelleinrichtung mechanisch miteinander verbunden. Insbesondere ist das zumindest eine optische Element mit der zumindest einen mikrofluidischen Kavität und/oder mit der zumindest einen Stelleinrichtung mechanisch verbunden. Alternativ oder zusätzlich kann die zumindest eine Stelleinrichtung mit der zumindest einen mikrofluidischen Kavität mechanisch verbunden sein.

In einer weiteren bevorzugten Ausführungsform sind die Stelleinrichtung und die mikrofluidische Kavität ausgelegt und angeordnet, um in Folge einer Wechselwirkung der magnetischen Substanz mit einem angelegten Magnetfeld das zumindest eine optische Element in eine vom Magnetfeld abhängige Stellposition zu bringen. Mit dem Begriff "Stellposition" ist insbesondere eine Position (z.B. Koordinaten) und/oder eine Stellung bzw. Ausrichtung (z.B. eine Verkippung) des zumindest einen optischen Elements gemeint.

In einer weiteren bevorzugten Ausführungsform ist die zumindest eine mikrofluidische Kavität Bestandteil des zumindest einen optischen Elements. Mit anderen Worten ist die zumindest eine mikrofluidische Kavität in das zumindest eine optische Element integriert oder darin ausgebildet. Beispielsweise kann das optische Element eine Linse und eine Linsenhalterung umfassen. Die mikrofluidische Kavität kann z.B. in der Linsenhalterung ausgebildet sein. Insbesondere kann jedes optische Element eine zugehörige mikrofluidische Kavität aufweisen, und jede mikrofluidische Kavität kann Bestandteil des zu der jeweiligen mikrofluidischen Kavität zugehörigen optischen Elements sein.

In einer weiteren bevorzugten Ausführungsform umfasst bzw. ist die zumindest eine Stelleinrichtung ein Federelement und/oder ein Aufhängungselement. Im Falle eines Federelements ist das Federelement vorzugsweise mit dem zumindest einen optischen Element und/oder mit der zumindest einen mikrofluidischen Kavität mechanisch verbunden. Im Falle eines Aufhängungselements ist das zumindest eine optische Element an dem Aufhängungselement drehbar oder verkippbar angeordnet, aufgehängt oder gelagert. Ferner ist vorzugsweise die zumindest eine mikrofluidische Kavität mit dem Aufhängungselement mechanisch verbunden. Die Stelleinrichtung ist insbesondere ein rückstellfähiges Element, d.h. dass die Stelleinrichtung beim Wegfall einer die Stelleinrichtung auslenkenden Kraft (insbesondere bewirkt durch ein Magnetfeld) wieder in ihre Ausgangsposition zurückkehrt. Insbesondere umfasst oder ist die Stelleinrichtung ein elastisches Federelement und/oder eine rückstellfähige Aufhängung. Auf diese Weise ist es möglich, das zumindest eine optische Element durch Anlegen eines bestimmten Magnetfelds bzw. magnetischen Flusses in eine gewünschte Position bzw. Ausrichtung zu bringen.

In einer weiteren bevorzugten Ausführungsform werden das zumindest eine optische Element, die zumindest eine mikrofluidische Kavität und die zumindest eine Stelleinrichtung in einem einzigen Prozessschritt 3D-gedruckt. Damit kann eine effiziente, kostengünstige und präzise Herstellung der optischen Vorrichtung erfolgen.

Die dreidimensionale Struktur wird auf ein Ende bzw. einen Endabschnitt (d.h. auf eine Stirnseite bzw. Spitze) einer Faser oder eines Faserbündels gedruckt. Vorzugsweise ist die Faser eine optische Faser, insbesondere eine Glasfaser bzw. vorzugsweise ist das Faserbündel ein optisches Faserbündel, insbesondere ein Glasfaserbündel. Die Fasern können vorteilhafterweise zusätzlich zu etwaigen optischen Eigenschaften auch als Magnetkern für die Umwicklung mit Spulendraht dienen und ermöglichen somit ein höchstintegriertes System.

Ferner weist die dreidimensionale Struktur eine Mikrospule auf. Die Mikrospule ist derart angeordnet, dass sie zumindest bereichsweise die Faser bzw. das Faserbündel umschließt. Die Spule kann vorteilhafterweise zur Erzeugung des Magnetfelds, mit dem die Aktuierung des zumindest einen optischen Elements kontrolliert bzw. gesteuert werden kann, dienen. Die von der Spule umwickelte Faser bzw. das von der Spule umwickelte Faserbündel (insbesondere dessen Endabschnitt, an dem die dreidimensionale Struktur gedruckt wird) kann dabei, wie bereits oben erwähnt, zusätzlich als Magnetkern dienen.

In einer weiteren bevorzugten Ausführungsform weist die dreidimensionale Struktur ferner eine magnetisierbare Hülse, d.h. eine Hülse aus magnetisierbarem Material auf. Die magnetisierbare Hülse kann z.B. aus Eisen, Nickel, Kobalt und/oder einer passenden Legierung (z.B. aus seltenen Erden) gebildet sein. Die magnetisierbare Hülse ist vorzugsweise derart angeordnet, dass sie zumindest bereichsweise die Faser oder das Faserbündel umschließt. Weiter bevorzugt ist die Mikrospule derart angeordnet, dass sie zumindest bereichsweise die magnetisierbare Hülse umschließt. Mit anderen Worten ist die magnetisierbare Hülse zumindest bereichsweise zwischen der Faser bzw. dem Faserbündel und der Mikrospule angeordnet. Die Hülse dient dazu, das Magnetfeld der Spule zu homogenisieren und/oder zu verstärken.

In einer weiteren bevorzugten Ausführungsform weist die dreidimensionale Struktur zumindest zwei optische Elemente, z.B. Linsen, auf. Insbesondere werden zwei Linsen, welche unabhängig voneinander beweglich sind, vorzugsweise übereinander oder ineinander, derart angeordnet, so dass sie in Folge verschieden starker Federkonstanten von jeweils zugehörigen Stelleinrichtungen und/oder in Folge verschiedener Größen oder Formen von zugehörigen mikrofluidischen Kavitäten im (gleichen) Magnetfeld unterschiedliche Bewegungen ausführen. Dadurch kann z.B. eine Brennweitenänderung realisiert werden, ohne dass sich die Lage der Bildebene ändert (Zoom-System).

In einer weiteren bevorzugten Ausführungsform weist die dreidimensionale Struktur zumindest zwei Stelleinrichtungen bzw. Federelemente mit unterschiedlichen Federkonstanten auf. Insbesondere kann die dreidimensionale Struktur zu jedem optischen Element ein zugehöriges Federelement aufweisen, so dass die Anzahl der optischen Elemente der Anzahl der Stelleinrichtungen bzw. Federelemente entspricht. Vorzugsweise ist jedes optische Element mit einer zugehörigen Stelleinrichtung bzw. einem zugehörigen Federelement mechanisch verbunden. Auf Grund der unterschiedlichen Federkonstanten der Stelleinrichtungen bzw. Federelemente können die optischen Elemente unterschiedlich bewegt werden. Folglich bewirkt ein bestimmtes Magnetfeld unterschiedliche Auslenkungen der optischen Elemente. Somit führen die optischen Elemente in einem angelegten Magnetfeld unterschiedliche Bewegungen aus. Auf diese Weise kann z.B. ein Zoom-System realisiert werden.

In einer weiteren bevorzugten Ausführungsform weist die dreidimensionale Struktur zumindest zwei mikrofluidische Kavitäten unterschiedlicher Größe (Länge, Breite, Höhe, Durchmesser) und/oder Form und/oder Volumina auf. Insbesondere kann die dreidimensionale Struktur zu jedem optischen Element eine zugehörige mikrofluidische Kavität aufweisen, so dass die Anzahl der optischen Elemente der Anzahl der mikrofluidischen Kavitäten entspricht. Vorzugsweise ist jedes optische Element mit einer mikrofluidischen Kavität mechanisch verbunden. Auf Grund der unterschiedlichen Größe und/oder Form und/oder Volumina der mikrofluidischen Kavitäten können die optischen Elemente unterschiedlich bewegt werden. Folglich bewirkt ein bestimmtes Magnetfeld unterschiedliche Kräfte auf die sich in den unterschiedlichen Kavitäten befindende magnetische Substanz. Somit führen die optischen Elemente in einem angelegten Magnetfeld unterschiedliche Bewegungen aus. Auf diese Weise kann z.B. ein Zoom-System realisiert werden.

Es ist auch möglich, die oben beschriebenen Merkmale zu kombinieren, so dass z.B. die dreidimensionale Struktur zu jedem optischen Element eine zugehörige Stelleinrichtung und eine zughörige mikrofluidische Kavität aufweist, wobei die Stelleinrichtungen jeweils unterschiedliche Federkonstanten und die mikrofluidischen Kavitäten unterschiedliche Größen und/oder Formen und/oder Volumina aufweisen.

In einer weiteren bevorzugten Ausführungsform weist die dreidimensionalen Struktur ferner zumindest ein Führungselement zur geführten bzw. gerichteten Aktuierung (d.h. Positionierung und/oder Ausrichtung, insbesondere Bewegung, Verlagerung, Kippung und/oder Rotation) des zumindest einen optischen Elements, insbesondere in die Stellposition, auf. Mit Hilfe des Führungselements ist die optische Vorrichtung weniger anfällig gegenüber Ungenauigkeiten des Gradientenverlaufs des angelegten magnetischen Feldes.

In einer weiteren bevorzugten Ausführungsform wird die dreidimensionale Struktur der optischen Vorrichtung mittels eines 3D-Lithografiesystems, insbesondere mittels eines 3D-Laser-Lithografiesystems bzw. eines 3D-Multiphotonen-Laser-Lithografiesystems, welches vorzugsweise auf einer Zwei-Photonen-Polymerisation eines UV-härtenden Fotolackes basiert, hergestellt bzw. ausgebildet.

In einer weiteren bevorzugten Ausführungsform umfasst das Verfahren ferner ein Aushärten der magnetischen Substanz bzw. Flüssigkeit. Dies kann z.B., abhängig von der jeweiligen magnetischen Substanz, durch ein Erwärmen oder ein Abkühlen und/oder durch ein Beleuchten, beispielsweise mit UV-Licht, der magnetischen Substanz erfolgen. Insbesondere kann das Aushärten dadurch beschleunigt werden. Alternativ oder zusätzlich umfasst das Verfahren ferner ein Eintrocknen bzw. ein Eintrocknen lassen der magnetischen Substanz bzw. Flüssigkeit. Das Eintrocknen kann z.B. einfach durch ein Warten und/oder durch ein Erwärmen und/oder Beleuchten und/oder Fönen erfolgen. Es ist auch möglich, dass die magnetische Substanz erst durch das Aushärten und/oder Eintrocknen die gewünschte Funktionalität erhält bzw. zur Verfügung stellt.

Ein weiterer unabhängiger Aspekt zur Lösung der Aufgabe betrifft eine aktuierbare optische Vorrichtung, welche eine mit einem 3D-Drucker hergestellte, dreidimensionale Struktur umfasst, wobei die dreidimensionale Struktur aufweist:
- zumindest ein optisches Element; und
- zumindest eine mikrofluidische Kavität, die mit einer magnetischen Substanz befüllt ist;
wobei die dreidimensionale Struktur auf ein Ende einer Faser oder eines Faserbündels gedruckt ist, wobei die dreidimensionale Struktur ferner eine Mikrospule aufweist, und wobei die Mikrospule derart angeordnet ist, dass sie zumindest bereichsweise die Faser oder das Faserbündel umschließt.

In einer bevorzugten Ausführungsform weist die die dreidimensionale Struktur ferner auf:
- zumindest eine Stelleinrichtung zum Positionieren des zumindest einen optischen Elements.

Insbesondere ist das zumindest eine optische Element mit Hilfe der zumindest einen (mit einer magnetischen Substanz) befüllten mikrofluidischen Kavität und der zumindest einen Stelleinrichtung über ein Magnetfeld bzw. in Abhängigkeit eines Magnetfelds, aktuierbar.

Die dreidimensionale Struktur wird mittels einer 3D-Drucktechnik, d.h. mittels eines 3D-Druckers bzw. eines 3D-Druckverfahrens ausgebildet bzw. gedruckt. Der 3D-Drucker bzw. das 3D-Druckverfahren ist vorzugsweise ein 3D-Lithografiesystem bzw. 3D-Lithografieverfahren und insbesondere ein 3D-Laser-Lithografiesystem bzw. ein 3D-Laser-Lithografieverfahren. Als Beispiel für einen 3D-Drucker bzw. ein 3D-Drucksystem sei das kommerziell erhältliche 3D-Laser-Lithografiesystem "Photonic Professional GT^{™}" der Nanoscribe GmbH genannt, welches auf einer Zwei-Photonen-Polymerisation eines UV-härtenden Fotolackes basiert. Es versteht sich, dass prinzipiell aber auch andere 3D-Drucker oder andere 3D-Druckverfahren verwendet werden können.

Die zumindest eine mikrofluidische Kavität ist vorzugsweise ausgelegt oder ausgebildet (d.h. weist derart kleine Abmessungen oder Dimensionen auf), um die magnetische Substanz unter Ausnutzung von Kapillareffekten bzw. dem Wirken von Kapillarkräften aufzunehmen bzw. aufnehmen zu können.

Die aktuierbare optische Vorrichtung kann ferner Mittel zur Erzeugung eines Magnetfelds umfassen, z.B. einen durch einen Mikrocontroller gesteuerten Elektromagneten. Insbesondere kann auch der Mikrocontroller Bestandteil der aktuierbaren optischen Vorrichtung sein. Entsprechend kann das oben beschriebene Verfahren zur Herstellung der aktuierbaren optischen Vorrichtung ein Bereitstellen von Mitteln zur Erzeugung eines Magnetfelds, insbesondere ein Bereitstellen eines mit einem Mikrocontroller gesteuerten Elektromagneten, umfassen.

Ein weiterer unabhängiger Aspekt zur Lösung der Aufgabe betrifft eine Verwendung einer magnetischen Substanz, insbesondere eines magnetisierbaren Fluids, zur Realisierung bzw. Herstellung einer magnetisch aktuierbaren optischen Vorrichtung, wobei die optische Vorrichtung eine mit Hilfe eines 3D-Druckers ausgebildete (d.h. 3D-gedruckte) dreidimensionale Struktur mit zumindest einem optischen Element und zumindest einer mikrofluidischen Kavität aufweist, wobei die dreidimensionale Struktur auf ein Ende einer Faser oder eines Faserbündels gedruckt wird, wobei die dreidimensionale Struktur ferner eine Mikrospule aufweist, wobei die Mikrospule derart angeordnet ist, dass sie zumindest bereichsweise die Faser oder das Faserbündel umschließt, und wobei die magnetische Substanz in die zumindest eine mikrofluidische Kavität gefüllt wird. Insbesondere umfasst oder ist die magnetische Substanz ein Ferrofluid und/oder ein flüssiges magnetisierbares Polymer.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll, sofern diese unter den Gegenstand der unabhängigen Ansprüche fallen.

### Kurze Beschreibung der Zeichnungen

- Figur 1: zeigt ein schematisches Ablaufdiagramm des erfindungsgemäßen Verfahrens gemäß einer bevorzugten Ausführungsform.
- Figur 2: zeigt eine mikroskopische Aufnahme einer aktuierbaren optischen Vorrichtung gemäß einer beispielhaften Ausführungsform der vorliegenden Erfindung; Dabei zeigt Figur 2a eine Momentaufnahme ohne angelegtes Magnetfeld und Figur 2b eine Momentaufnahme mit angelegtem Magnetfeld.
- Figur 3: zeigt eine schematische Prinzipskizze einer aktuierbaren optischen Vorrichtung und deren Befüllung mit einer magnetischen Substanz gemäß einer bevorzugten Ausführungsform der Erfindung; Dabei zeigt Figur 3a eine aktuierbare optische Vorrichtung ohne Befüllung, Figur 3b den Befüllvorgang, und Figur 3c die aktuierbare optische Vorrichtung mit Befüllung unter dem Einfluss eines angelegten Magnetfelds.
- Figur 4a: zeigt eine schematische Zeichnung einer aktuierbaren optischen Vorrichtung gemäß einer beispielhaften Ausführungsform der Erfindung;
- Figur 4b: zeigt eine schematische Zeichnung einer aktuierbaren optischen Vorrichtung gemäß einer weiteren beispielhaften Ausführungsform der Erfindung;
- Figur 4c: zeigt eine schematische Zeichnung einer aktuierbaren optischen Vorrichtung gemäß einer weiteren beispielhaften Ausführungsform der Erfindung.
- Figur 5a-c: zeigen schematische Zeichnungen einer aktuierbaren optischen Vorrichtung gemäß einer weiteren beispielhaften Ausführungsform der Erfindung in unterschiedlichen Ansichten.
- Figur 6a: zeigt eine mikroskopische Aufnahme einer aktuierbaren optischen Vorrichtung gemäß einer beispielhaften Ausführungsform der Erfindung ohne angelegtes Magnetfeld;
- Figur 6b: zeigt eine mikroskopische Aufnahme der aktuierbaren optischen Vorrichtung von Figur 6a unter dem Einfluss eines angelegten Magnetfelds.
- Figur 7a-c: zeigen schematische Zeichnungen einer aktuierbaren optischen Vorrichtung gemäß einer weiteren beispielhaften Ausführungsform der Erfindung. Dabei zeigt Figur 7a die optische Vorrichtung in einer perspektivischen Draufsicht, während die Figuren 7b und 7c die optische Vorrichtung jeweils für B = 0 und B ≠ 0 in einer Seitenansicht zeigen.
- Figur 8a: zeigt eine schematische Zeichnung einer aktuierbaren optischen Vorrichtung gemäß einer weiteren beispielhaften Ausführungsform der Erfindung;
- Figur 8b: zeigt eine schematische Zeichnung einer aktuierbaren optischen Vorrichtung gemäß einer weiteren beispielhaften Ausführungsform der Erfindung; und
- Figur 8c: zeigt eine schematische Zeichnung einer aktuierbaren optischen Vorrichtung gemäß einer weiteren beispielhaften Ausführungsform der Erfindung.

### Detaillierte Beschreibung der Zeichnungen

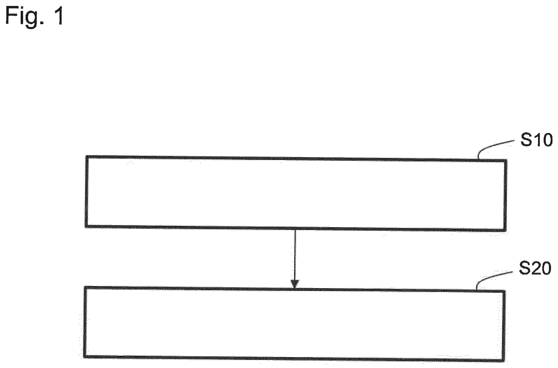

Die **Figur 1** zeigt ein schematisches Ablaufdiagramm des erfindungsgemäßen Verfahrens zum Herstellen einer aktuierbaren optischen Vorrichtung gemäß einer bevorzugten Ausführungsform. Das Verfahren umfasst den Schritt S10, nämlich ein Ausbilden einer dreidimensionalen Struktur der optischen Vorrichtung mit Hilfe eines 3D-Druckers. Die dreidimensionale Struktur wird dabei derart designt und gedruckt, dass die dreidimensionale Struktur zumindest ein optisches Element, wie beispielsweise eine Blende, eine Linse, ein Linsensystem oder ein Objektiv, und zumindest eine mikrofluidische Kavität, d.h. zumindest einen Hohlraum, zur Aufnahme einer magnetischen Substanz aufweist. In einem weiteren Schritt S20 umfasst das Verfahren ein Befüllen der zumindest einen mikrofluidischen Kavität mit der magnetischen Substanz. Das Befüllen kann insbesondere mittels eines hochgenauen Inkjet-Druckers erfolgen, mit dem Flüssigkeiten mit einer Genauigkeit von 0,1 Femtoliter bis 10 Pikoliter abgegeben werden können, erfolgen. Auf diese Weise ist es möglich, magnetisierbares Material wie z.B. Ferrofluide in mikrooptische Systeme zu integrieren. Hierfür kann z.B. ein hochpräziser Inkjet-Drucker der Firma "SIJ Technology Corp." verwendet werden. Dieser findet normalerweise Anwendung in der Halbleitertechnik, um beispielsweise Leiterbahnen auf Platinen mit leitfähiger Tinte zu drucken. Für die kontrollierte Abgabe des Fluids wird der Inkjet-Drucker mit einer mit Ferrofluid befüllten Mikropipette bestückt. Aufgrund der hochpräzisen Ansteuerung der Mikropipette in Hinsicht des Verfahrweges und der Abgabe des Fluidvolumens, eignet sich der Inkjet-Drucker aber auch im Rahmen der vorliegenden Erfindung, nämlich um Mikrostrukturen mit einem Durchmesser von weniger als 500 µm mit Fluiden zu befüllen.

Die magnetische Substanz, insbesondere ein magnetisierbares Fluid, umfasst Mikro- oder Nanopartikel aus magnetisierbarem Material. Wegen der geringen Querschnittsfläche der Kavitäten < 200 µm dominieren Kapillarkräfte in dem System. Die Kapillarkräfte begünstigen, dass die mit Magnetpartikeln versetzten Fluide in die Kavität gesaugt werden. Durch das Einbringen von magnetischem Material in die 3D-gedruckten Bauteile reagieren diese auf externe Magnetfelder mit einer Stellkraft.

Dabei kann vorteilhafterweise das Magnetfeld in einer größeren Entfernung oder in unmittelbarer Nähe der optischen Bauteile erzeugt werden. Wird für das Befüllen z.B. ein sogenanntes Ferrofluid verwendet, kommt es beim Anlegen eines äußeren Magnetfeldes zur magnetischen Relaxation der magnetischen Partikel. Bei der Ausrichtung entlang eines Feldgradienten kommt es zur Magnetisierung des Ferrofluids und zur Entstehung einer Kraft.

In der Regel weisen Flüssigkeiten keine magnetischen Eigenschaften auf. Herkömmliche Flüssigkeiten besitzen meistens nur paramagnetische Eigenschaften mit einer sehr geringen Suszeptibilität. Aufgrund dieser geringen Suszeptibilität ist die Reaktion herkömmlicher Flüssigkeiten selbst bei starken magnetischen Feldern nur schwach. Eine magnetische Kontrolle dieser Flüssigkeiten über ein externes Magnetfeld, um z.B. die Fließrichtung des Fluids zu ändern, ist somit nicht möglich. Mit Hilfe von Ferrofluiden, die in den 60er Jahren des 20. Jahrhunderts entdeckt wurden, ist dies jedoch möglich. Anwendung finden Ferrofluide bisher beispielsweise zur Dichtung von Wellen aber auch zur Krebsbekämpfung in der Medizin. Ferrofluide sind kolloide Suspensionen aus magnetischen Partikeln mit einer Größenordnung um 5-15 nm. In den meisten kommerziellen Ferrofluiden bestehen die darin enthaltenen Partikel aus Magnetit. Diese sind in einer Trägerflüssigkeit dispergiert. Die Konzentration der magnetischen Partikel liegt in der Regel im Bereich von 7% bis 10%. Je nach Anwendung werden unterschiedlichste Trägerflüssigkeiten für Ferrofluide verwendet. Herkömmliche Trägerflüssigkeiten sind z.B. mineralische Öle, Ester oder auch für medizinische Anwendungen Wasser. Um eine Agglomeration der magnetischen Partikel zu vermeiden, besitzen diese eine Oberflächenbeschichtung. Hierfür werden meist langkettige Moleküle (z.B. Ölsäuren) verwendet, die aufgrund von sterischer Abstoßung dafür sorgen, dass die Partikel nicht agglomerieren.

Alternativ zum Ferrofluid kann für die vorliegende Erfindung z.B. auch ein mit magnetischen oder magnetisierbaren Mikropartikeln gefülltes flüssiges Polymer, also ein flüssiges magnetisierbares Polymer, verwendet werden, welches nach dem Befüllen ausgehärtet wird, z.B. durch die Verwendung von UV-Licht oder durch Wärmeeintrag. Dieser Ansatz bietet zusätzlich die Möglichkeit, die Partikel vor dem Aushärten in einem externen Magnetfeld auszurichten, so dass mit der Verfestigung der Substanz ein Permanentmagnet erzeugt wird. Alternativ dazu besteht die Möglichkeit, Partikel nach der Verfestigung der flüssigen Substanz in einem starken externen Magnetfeld zu magnetisieren.

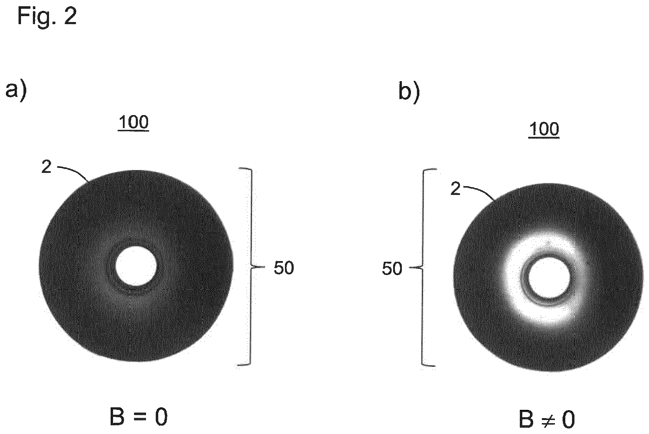

Die **Figur 2** zeigt eine mikroskopische Aufnahme einer aktuierbaren optischen Vorrichtung 100 gemäß einer beispielhaften Ausführungsform der vorliegenden Erfindung. In dem Beispiel der Figur 2 weist die aktuierbare optische Vorrichtung 100 eine dreidimensionale Struktur 50 mit einem optischen Element 2 auf. Das optische Element 2 ist diesem Ausführungsbeispiel eine variable Blende. Die variable Blende wird durch eine magnetische Substanz realisiert. Die magnetische Substanz (in der Figur 2 als schwarze Fläche dargestellt) wird unter dem Einfluss eines Magnetfelds B komprimiert. Während **Figur 2a** eine Momentaufnahme der variablen Blende ohne angelegtes Magnetfeld B zeigt, ist in der **Figur 2b** eine Momentaufnahme der variablen Blende mit angelegtem Magnetfeld B dargestellt. Das optische Element 2, also die Blende, ist eine einfache Schale mit kreisrunder Öffnung, die mittels Zwei-Photonen-Lithographie gedruckt werden und anschließend mit einer magnetischen Substanz, insbesondere einem Ferrofluid, befüllt werden kann. Wie in den Figuren 2a und 2b erkennbar ist, wird unter dem Einfluss eines Magnetfeldes das Ferrofluid im Randbereich der Schale komprimiert, womit die Blendenöffnung effektiv größer wird.

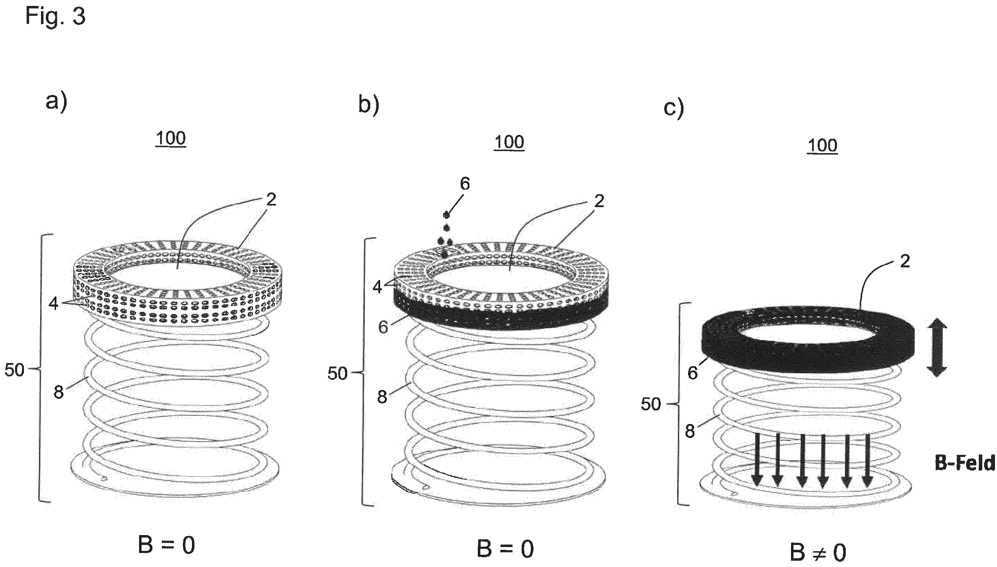

Die **Figur 3** zeigt eine schematische Prinzipskizze einer aktuierbaren optischen Vorrichtung 100 und deren Befüllung mit einer magnetischen Substanz 6 gemäß einer bevorzugten Ausführungsform der Erfindung. Dabei zeigt **Figur 3a** die aktuierbare optische Vorrichtung 100 ohne Befüllung. Die aktuierbare optische Vorrichtung 100 umfasst eine 3D-gedruckte dreidimensionale Struktur 50, welche ein optisches Element 2 (z.B. eine Linse, in der Figur 3 lediglich durch eine kreisrunde Öffnung dargestellt), eine mikrofluidische Kavität 4, welche über eine Vielzahl von Bohrungen von aussen zugänglich ist, und eine Stelleinrichtung 8 aufweist. Die Stelleinrichtung 8 ist in dieser beispielhaften Darstellung eine Feder bzw. ein Spiralfeder. **Figur 3b** stellt schematisch den Befüllvorgang mit der magnetischen Substanz 6 dar. Die magnetische Substanz 6 wird in die mikrofluidische Kavität 4 gefüllt. **Figur 3c** zeigt die aktuierbare optische Vorrichtung 100, in dessen Kavität 4 die magnetische Substanz vollständig befüllt wurde, und zwar unter dem Einfluss eines extern angelegten Magnetfelds B. Ohne Magnetfeld (Figuren 3a und 3b) befindet sich die Feder in einem entspannten Zustand. Durch das Anlegen eines Magnetfelds wirkt eine Kraft auf die magnetische Substanz, so dass die Kavität 4 und damit auch das optische Element 2 entlang der Federachse bewegt werden. Dabei wird die Feder zusammengedrückt und übt ihrerseits eine zur magnetischen Kraft entgegensetzte mechanische Kraft aus. Auf diese Weise kann das optische Element 2, in Abhängigkeit des angelegten Magnetfelds, in eine ganz bestimmte Stellposition gebracht werden, nämlich in eine Position, in welcher Kräftegleichgewicht herrscht. Nach Abschalten des Magnetfelds kehrt das optische Element 2 in Folge der Rückstellkraft der Feder wieder in seine Ausgangsposition zurück. Somit kann z.B. eine bidirektionale Bewegung von Mikrooptiken entlang ihrer optischen Achse erreicht werden. Über eine magnetische Anziehung und Abstoßung kann somit in Abhängigkeit eines angelegten Magnetfelds eine translatorische Bewegung erzielt werden. Nach Abschalten des Magnetfeldes kann eine Rückstellkraft, wie in dem hier beschriebenen Fall über ein Federelement, bereitgestellt werden. Dadurch können Einzellinsen, Linsengruppen oder andere funktionale Elemente in einem 3D-gedruckten Mikrosystem bewegt werden. Die Federgeometrien zur Erzeugung der Rückstellkraft werden dabei im gleichen Schritt wie die Kavitäten und die Linsen 3D-gedruckt.

Gemäß des Ausführungsbeispiels der Figur 3 kann das optische Element 2 eine einzelne Mikrolinse mit einer Kavität 4 um einen Randzylinder der Mikrolinse sein. Die Stelleinrichtung 8 bzw. die Feder ist direkt mit der Kavität mechanisch verbunden. Bei der Herstellung mittels Zwei-Photonen-Lithographie ist nach dem Schreibprozess der Strukturen ein Entwicklungsschritt notwendig. Bei dem Entwicklungsprozess wird das nicht ausgehärtete Polymer weggewaschen. Die gemusterten Bohrungen der Kavität 4 ermöglichen es vorteilhafterweise, nicht ausgehärtete Polymerreste aus dem Inneren der Kavität 4 während des Entwicklungsprozesses herauszulösen.

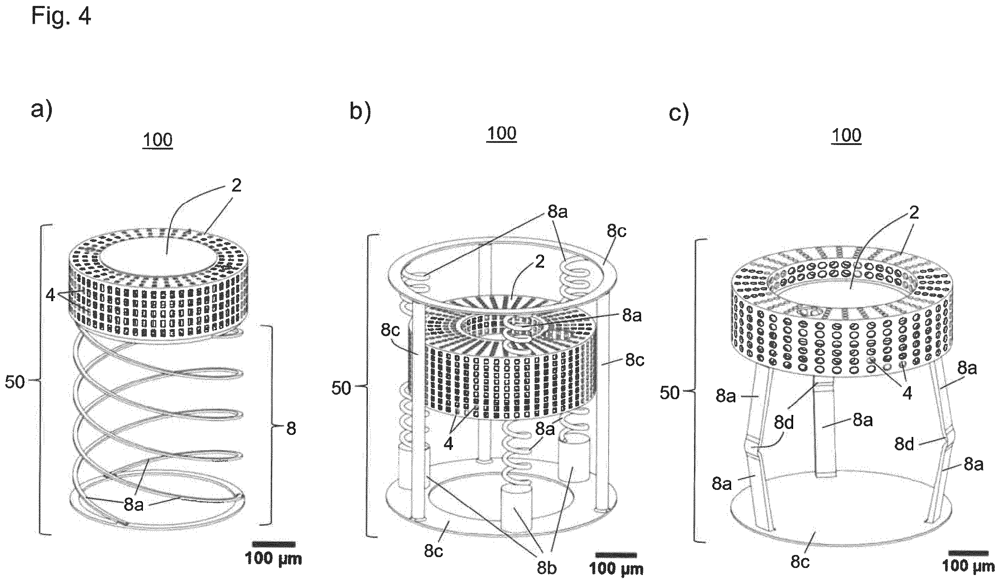

In der **Figur 4** sind drei beispielhafte Ausführungsformen einer erfindungsgemäßen aktuierbaren optischen Vorrichtung 100 gezeigt. Die in der Figur 4 dargestellten beispielhaften Designs umfassen alle eine einzelne Linse, welche in eine Kavität 4 eingebettet ist. **Figur 4a** zeigt eine dreidimensionale Struktur 50, welches drei um 120° rotierte Federelemente 8a als Stelleinrichtung 8 aufweist. Hierdurch kann eine möglichst gleichmäßige Kraftübertragung zwischen dem Stellelement 8 und der Mikrolinse 2 samt Kavität 4 ermöglicht werden. Außerdem kann dadurch sichergestellt werden, dass eine reproduzierbare axiale Bewegung gewährleistet wird. **Figur 4b** zeigt eine Ausführungsform der dreidimensionalen Struktur 50 mit drei in Reihe geschalteten Federelementen 8a, die jeweils auf einer zugehörigen Federelementstütze 8b angeordnet sind. Zudem umfasst die Stelleinrichtung 8 ein zusätzliches Stelleinrichtungsgerüst 8c. **Figur 4c** zeigt eine Ausführungsform der dreidimensionalen Struktur 50, welche mit dünnen Federbalken 8a, die sich über Filmscharniere 8c bewegen lassen.

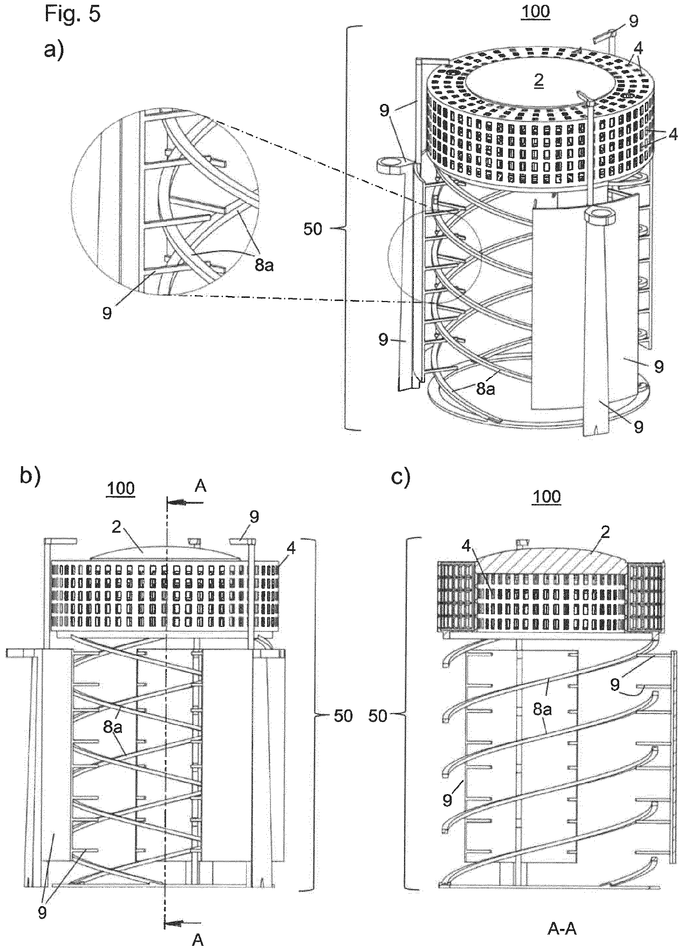

Die **Figur 5** zeigt schematische Zeichnungen einer aktuierbaren optischen Vorrichtung 100 gemäß einer weiteren beispielhaften Ausführungsform der Erfindung, wobei die optische Vorrichtung 100 in den **Figuren 5a, 5b und 5c** in unterschiedlichen Ansichten dargestellt ist. Zusätzlich zum optischen Element 2 (Linse), der mikrofluidischen Kavität 4 und den Federelementen 8a weist die dreidimensionale Struktur 50 noch eine Stützstruktur bzw. Stützstrukturen 9 auf. Diese Stützstruktur stellt sicher, dass die Federgänge während des Schreibprozesses und des Entwickelns nicht aufgrund von Benetzungseffekten verkleben ("Sticking"). Bei zu geringem Abstand zwischen den Stützkämmen und den Federgängen würden diese aneinander polymerisiert werden und ein Entfernen der Stützen wäre nicht mehr möglich. Nach dem Entwickeln kann die Stützstruktur 9 wieder entfernt werden. Das Entfernen der Stützstruktur 9 ist z.B. ebenfalls mit dem Inkjet-Drucker, insbesondere mit einer am Inkjet-Drucker installierten Mikropipette, möglich. Durch die hochpräzise Steuerung der Mikropipette lässt sich die Stützstruktur 9 unter Beobachtung durch ein Mikroskop in einfacher Weise entfernen.

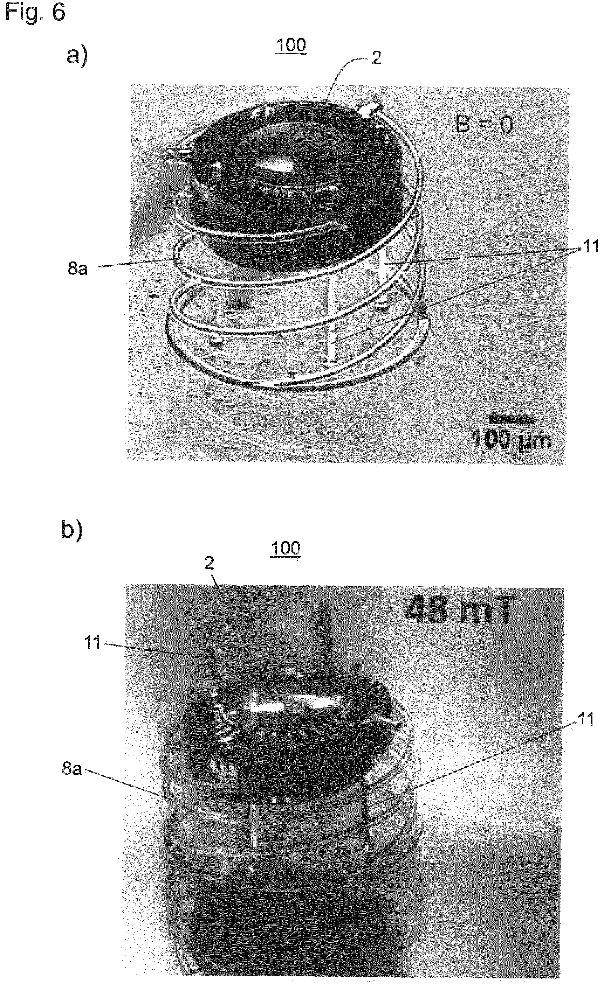

In der **Figur 6** sind mikroskopische Aufnahmen bzw. Fotos einer aktuierbaren optischen Vorrichtung 100, welche mit dem erfindungsgemäßen Verfahren hergestellt wurde, gezeigt. Das Design der dreidimensionalen Struktur 50 basiert auf dem in Figur 4a schematisch dargestellten Design und umfasst eine Linse 2, welche in eine mit einer magnetischen Substanz gefüllte Kavität 4 eingebettet ist, sowie drei um 120° versetzte Federelemente 8a. Zusätzlich weist die dreidimensionale Struktur 50 der optischen Vorrichtung 100 Führungselemente 11 auf, welche für eine gerichtete Bewegung des optischen Elements 2 bzw. der Linse sorgt. Figur 6 zeigt eine diesbezügliche experimentelle Umsetzung einer Variante mit Führungselementen 11, welche innerhalb eines von den Federelementen 8a umschlossenen Volumens angeordnet sind. Die Führungselemente 11 können z.B. Balken mit einem Dreieck-Profil umfassen bzw. sein. Durch ein solches Dreieck-Profil kann vorteilhafterweise eine axiale Bewegung mit einer nur geringen Auflagefläche erreicht werden. Beispielsweise kann die dreidimensionale Struktur 50 ein oder zwei, vorzugsweise drei, vier oder mehr Führungselemente aufweisen. **Figur 6a** zeigt eine mikroskopische Aufnahme der aktuierbaren optischen Vorrichtung 100 ohne angelegtes Magnetfeld und **Figur 6b** zeigt eine mikroskopische Aufnahme der aktuierbaren optischen Vorrichtung 100 unter dem Einfluss eines angelegten Magnetfelds mit B = 48 mT. Wie aus den Bildern erkennbar ist, sind die Federelemente 8a in Figur 6b gestaucht und das optische Element 2 hat im Vergleich zur Figur 6a eine andere Position eingenommen. Auf Basis bzw. in Abhängig des Magnetfelds kann also die optische Vorrichtung 100 aktuiert bzw. das optische Element 2 bewegt werden.

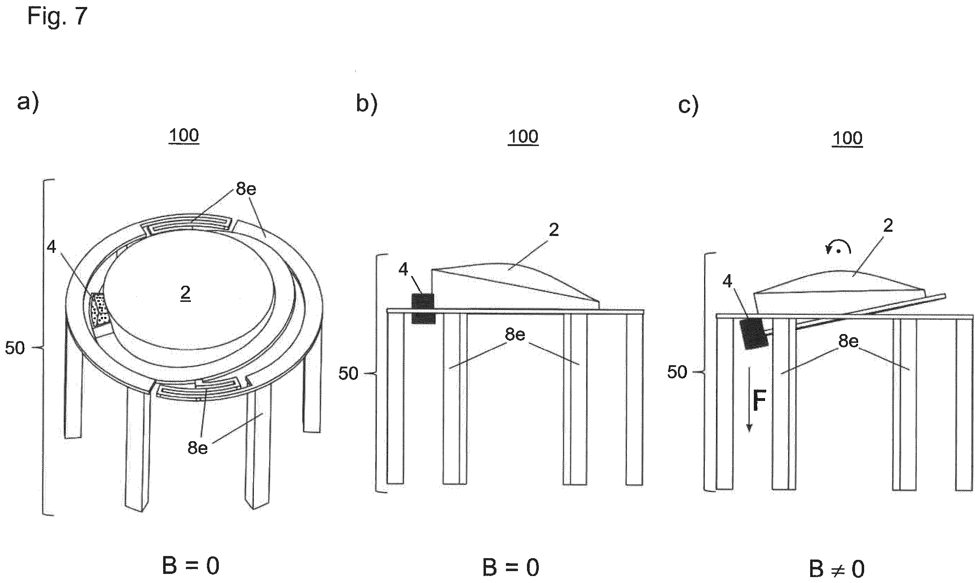

Die **Figur 7** zeigt schematische Zeichnungen einer aktuierbaren optischen Vorrichtung 100 gemäß einer weiteren beispielhaften Ausführungsform der Erfindung. Dabei zeigt **Figur 7a** die optische Vorrichtung 100 in einer perspektivischen Draufsicht, während die **Figuren 7b und 7c** die optische Vorrichtung 100 jeweils für B = 0 und B # 0 in einer Seitenansicht zeigen. In dem Ausführungsbeispiel der Figur 7 umfasst bzw. ist die Stelleinrichtung 8 eine Aufhängung bzw. ein Aufhängungselement 8e. Neben translatorischen Bewegungen, z.B. entlang der optischen Achse eines Linsensystems, sind somit auch Kipp-Bewegungen möglich. Mit solchen Kipp-Bewegungen lassen sich zum Beispiel Systeme realisieren, die einen Bereich im Bild- oder Objektraum abscannen oder das Sichtfeld einer Abbildungsoptik dynamisch erweitern können. Die Figuren 7a-c illustrieren eine solche 3D-gedruckte, magnetisch kippbaren Optik. Eine seitlich am optischen Element 2 angebrachte Kavität 4 (schwarz) reagiert nach dem Befüllen mit magnetischem Material auf externe Magnetfelder mit einer gerichteten Kraft F (siehe Figur 7c). Diese bewirkt aufgrund der Aufhängung der Linse ein Drehmoment und ermöglicht ein elastisches bzw. rückstellfähiges Verkippen der Optik. Insbesondere kann dazu die Aufhängung 8e elastische bzw. rückstellfähige Federelemente aufweisen.

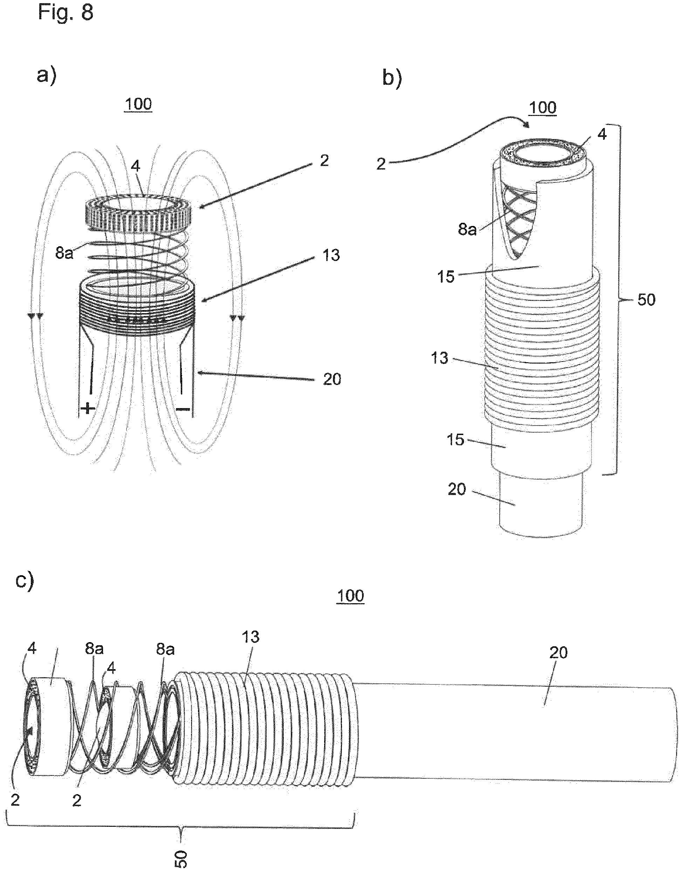

Die **Figur 8** zeigt schematische Zeichnungen einer magnetisch aktuierbaren optischen Vorrichtung 100 gemäß weiterer beispielhafter Ausführungsformen der Erfindung. Diesen Ausführungsformen ist gemeinsam, dass die optische Vorrichtung 100 bzw. die dreidimensionale Struktur 50 auf dem Ende bzw. der Facette einer Glasfaser 20 (oder eines Faserbündels) angeordnet ist bzw. direkt auf die Glasfaser 20 bzw. einem Faserbündel gedruckt wurde. Dies wird durch die insgesamt kompakte Bauweise und den Herstellungsprozess ermöglicht.

Die Fasern 20 können gleichzeitig auch als Kern für die Umwicklung mit Spulendraht bzw. für eine Mikrospule 13 dienen und ermöglichen somit ein höchstintegriertes System, wie es in **Figur 8a** schematisch dargestellt ist. Die Mikrospule 13 kann als Bestandteil der dreidimensionalen Struktur 50 ebenfalls 3D-gedruckt werden. Die Mikrospule 13 kann elektrische Anschlüsse (in Figur 8a mit + und - dargestellt) zum Anlegen einer Spannung aufweisen, um durch einen entsprechenden Stromfluss durch die Spule 13 ein Magnetfeld zu induzieren. Auch eine dafür notwendige Energiequelle, beispielsweise ein Netzteil oder eine Batterie bzw. ein wieder aufladbarer Akku kann Bestandteil der aktuierbaren optischen Vorrichtung 100 sein.

Für eine Verstärkung und Homogenisierung des Magnetfelds kann es vorteilhaft sein, innerhalb der Spule 13 eine Hülse 15 aus magnetisierbarem Material zu integrieren, wie es in **Figur 8b** schematisch dargestellt ist. Die magnetisierbare Hülse 15 kann als Bestandteil der dreidimensionalen Struktur 50 ebenfalls 3D-gedruckt werden. Alternativ kann die magnetisierbare Hülse 15 als vorgefertigte Komponente über die Faser 20 geschoben und fixiert werden. Die magnetisierbare Hülse 15 ist derart angeordnet, dass sie zumindest bereichsweise die Stelleinrichtung 8 bzw. die Federelemente 8a umgibt. Ferner umgibt die Hülse 15 auch bereichsweise das Faserbündel 20. Die Mikrospule 13 ist derart angeordnet, dass sie die Hülse 15 umgibt. Die Faser bzw. das Faserbündel 20 kann somit neben der 3D-gedruckten dreidimensionalen Struktur 50 auch Bestandteil der aktuierbaren optischen Vorrichtung 100 sein.

In weiteren Varianten können die zuvor beschriebenen Systeme nun kombiniert werden. So ist es z.B. möglich, zwei getrennt bewegliche optischen Elemente 2 (z.B. Linsen) übereinander oder ineinander anzuordnen, wie es in **Figur 8c** schematisch dargestellt ist, um sie mit verschieden starken Federkonstanten und/oder verschieden großen Kavitäten zu versehen. Auf diese Weise führen die optischen Elemente 2 im gleichen Magnetfeld unterschiedliche Bewegungen aus. Damit wird z.B. eine Brennweitenänderung möglich, ohne dass sich die Lage der Bildebene ändert (Zoom-System).

Die vorliegende Erfindung könnte z.B. neue Anwendungsfelder in der medizinischen Endoskopie oder der technischen Inspektion eröffnen. Durch die Möglichkeit, Mikrooptiken aktiv fokussieren zu können, wäre es z.B. möglich, Objektive mit großer Blendenöffnung und geringer Schärfentiefe herzustellen. Durch ein schnelles Verfahren des Fokus und der Aufnahme mehrerer Bilder könnten diese mittels Bildverarbeitungssoftware zusammengesetzt werden und so eine Aufnahme mit dennoch großer Tiefenschärfe erstellt werden. Durch eine große Blendenöffnung bzw. erhöhte Lichtstärke des Objektivs kann das Auflösungsvermögen der Optiken gesteigert werden und mittels Bildverarbeitung dem Operateur dennoch ein permanent scharfes Bild bereitgestellt werden. Dabei wäre es sinnvoll, die Optiken direkt auf einen Bildsensor zu drucken, da mit einem Bildsensor eine wesentlich größere Auflösung als mit einem Glasfaserbündel erreicht werden kann.

Außerdem denkbar wäre die Umsetzung eines Mikro-Zoomsystems auf Basis der vorliegenden Erfindung. Dieses könnte z.B. durch mehrere Linsengruppen realisiert werden, welche auf Federn mit unterschiedlich dicken Federgängen angebracht sind. Somit könnte man nichtlineare Verfahrwege erreichen, wie sie bei Zoomsystemen benötigt werden. Bei unterschiedlich dicken Federgänge würden zunächst die weichen Bereiche gestaucht werden bis diese vollständig aufeinander liegen. Anschließend werden die härteren Bereiche gestaucht. Dadurch ist eine Anpassung des Verfahrwegs unterschiedlicher Linsengruppen denkbar.

Im Falle eines Schwenksystems oder eines Systems, bei dem die Optik lateral zur Bildebene bewegt wird, könnten mit Hilfe der vorliegenden Erfindung auch Ansätze zur Auflösungssteigerung durch Superposition umgesetzt werden. Dies ist besonders dann relevant, wenn Faserbündel zur Abbildung eingesetzt werden. Ihre Pixelierung führt normalerweise zu einem Informations- und Auflösungsverlust. Durch ein leichtes Verschieben und/oder Kippen der Optik kann die Bildebene auf bekannte Art und Weise über die Faserfacette bewegt werden, was ein Herausrechnen der Pixelierung und ein Füllen entsprechender Lücken im Bildraum ermöglicht.

Es versteht sich, dass auch andere als die oben beispielhaft beschriebenen Designs möglich sind. Die Designs können in einfacher Weise mit einem CAD-Programm erstellt und sodann mit einem 3D-Drucker umgesetzt werden.

Nach dem 3D-Druck bzw. Schreibprozess können vorzugsweise vier Entwicklungsstufen einer Probe durchlaufen werden. Als erstes wird die Probe in ein Becherglas mit einem Entwickler (z.B. "mr-Dev 600" der micro resist technology GmbH) gegeben. Hierbei wird beachtet, dass die Probe möglichst langsam und horizontal in den Entwickler eintaucht. Dadurch kann verhindert werden, dass die feinen Federgänge während des Entwickelns zerstört werden. Nach einer 15-minütigen Entwicklungszeit wird die Probe in Isopropanol für ca. 2 Minuten gespült. Hierdurch wird der Entwickler von der Probe gewaschen und letzte nicht polymerisierte Reste des IP-S Resists werden entfernt. Im vorletzten Schritt wird die Probe vorsichtig mit Stickstoff-Gas getrocknet. Um die Mikrostrukturen vollständig aushärten zu lassen, werden diese schließlich für eine Stunde in einen Laborofen bei 100°C gegeben. Nach dem Entwicklungsprozess können die Proben unter dem Mikroskop untersucht und beurteilt werden. Anschließend können die Stütz- bzw. Hilfsstrukturen 9, falls vorhanden, mittels der Mikropipette des Inkjet-Druckers entfernt werden. Schließlich können die Proben bzw. Kavitäten mit der magnetischen Substanz befüllt werden.

Mit Hilfe der vorliegenden Erfindung können magnetische Nano- oder Mikropartikel in optische Mikrosysteme integriert werden und somit die 3D-gedruckten Mikroobjektive mittels magnetischer Anregung beweglich gemacht werden. Insbesondere in Kombination mit flexiblen Federelementen ist eine wiederholbare Bewegung der Systemkomponenten möglich, sowohl statisch als auch im Resonanzbetrieb. Ein Vorteil der beschriebenen Lösung ist insbesondere, dass die Steuerung der Optiken durch Anlegen eines äußeren Magnetfeldes über eine größere Strecke erfolgen kann. Nach der Integration des magnetischen bzw. magnetisierbaren Materials in die mikrooptischen Bauteile können auch noch weitere funktionale Elemente positioniert und unter Live-Beobachtung positioniert und fixiert werden. Denkbar wäre neben der Realisierung von Zoom- oder Kippsystemen auch die Umsetzung eines Kompensators, um beispielsweise Aberrationen zu korrigieren.

Die vorliegende Erfindung ermöglicht es, Komponenten, Einzellinsen oder Linsengruppen in einem 3D-gedruckten Mikroobjektiv beweglich zu machen. Damit löst sie ein Problem, das auf dieser Größenskala und z.B. direkt auf der Spitze von Glasfasern bislang nicht gelöst werden konnte. Zusammengefasst können mit der Erfindung bewegliche, steuerbare Optikkomponenten im Submillimeterbereich erzeugt und angesteuert werden. Insbesondere wird die Herstellung von kompakten, aktuierbaren Mikrooptiken, die durch ein Magnetfeld präzise und schnell gesteuert werden können, möglich. Damit können z.B. Zoomsysteme, fokussierbare Optiken, Kompensatorelemente oder variable Blenden erzeugt werden. Alternativ kann die Erfindung aber auch für ein hochpräzises Alignment verwendet werden. Dabei könnte z.B. eine optische Komponente mittels eines externen Magnetfeldes hochpräzise gegenüber einer zweiten Komponente ausgerichtet werden.

### Bezugszeichenliste

- 2: Optisches Element
- 4: Mikrofluidische Kavität / Hohlraum
- 6: Magnetische Substanz
- 8: Stelleinrichtung
- 8a: Federelement
- 8b: Federelementstütze
- 8c: Stelleinrichtungsgerüst
- 8d: Filmscharnier
- 9: Stützstruktur
- 11: Führungselement
- 13: Mikrospule
- 15: Magnetisierbare Hülse
- 20: Faser (Glasfaser) / Faserbündel
- 50: Dreidimensionale Struktur
- 100: Optische Vorrichtung
- A: Achse
- B: Magnetfeld
- F: Kraft
- S10: Ausbilden einer dreidimensionalen Struktur
- S20: Befüllen von zumindest einer mikrofluidischen Kavität der ausgebildeten dreidimensionalen Struktur mit einer magnetischen Substanz

## Patentansprüche

1. Verfahren zur Herstellung einer aktuierbaren optischen Vorrichtung (100), umfassend die Schritte:
- Ausbilden einer dreidimensionalen Struktur (50) der optischen Vorrichtung (100) mit Hilfe eines 3D-Druckers derart, dass die dreidimensionale Struktur (50) aufweist:
-- zumindest ein optisches Element (2), und
-- zumindest eine mikrofluidische Kavität (4) zur Aufnahme einer magnetischen Substanz (6);
- Befüllen der zumindest einen mikrofluidischen Kavität (4) mit der magnetischen Substanz (6);
wobei die dreidimensionale Struktur (50) auf ein Ende einer Faser (20) oder eines Faserbündels gedruckt wird, wobei die dreidimensionale Struktur (50) ferner eine Mikrospule (13) aufweist, und wobei die Mikrospule (13) derart angeordnet ist, dass sie zumindest bereichsweise die Faser (20) oder das Faserbündel umschließt.

2. Verfahren nach Anspruch 1, wobei die magnetische Substanz (6) ein Ferrofluid und/oder ein flüssiges Polymer, welches magnetische und/oder magnetisierbare Mikro- oder Nanopartikel aufweist, umfasst.

3. Verfahren nach Anspruch 1 oder 2, wobei die dreidimensionale Struktur (50) ferner aufweist:
-- zumindest eine Stelleinrichtung (8) zum Positionieren des zumindest einen optischen Elements, wobei die zumindest eine Stelleinrichtung (8) insbesondere ein Federelement (8a) und/oder ein Aufhängungselement (8e) umfasst.

4. Verfahren nach Anspruch 3, wobei die Stelleinrichtung (8) und die mikrofluidische Kavität (4) ausgelegt und angeordnet sind, um in Folge einer Wechselwirkung der magnetischen Substanz (6) mit einem angelegten Magnetfeld (B) das zumindest eine optische Element (2) in eine vom Magnetfeld (B) abhängige Stellposition zu bringen.

5. Verfahren nach einem der vorangehenden Ansprüche, wobei die zumindest eine mikrofluidische Kavität (4) Bestandteil des zumindest einen optischen Elements (2) ist.

6. Verfahren nach einem der vorangehenden Ansprüche, wobei die dreidimensionale Struktur (50) ferner eine magnetisierbare Hülse (15) aufweist, wobei die magnetisierbare Hülse (15) derart angeordnet ist, dass die magnetische Hülse (15) zumindest bereichsweise die Faser (20) oder das Faserbündel umschließt, und wobei die Mikrospule (13) derart angeordnet ist, dass sie zumindest bereichsweise die magnetisierbare Hülse (15) umschließt.

7. Verfahren nach einem der vorangehenden Ansprüche, wobei die dreidimensionale Struktur (50) zumindest zwei optische Elemente (2) aufweist.

8. Verfahren nach Anspruch 7,
wobei die dreidimensionale Struktur (50) zumindest zwei Stelleinrichtungen (8) mit unterschiedlichen Federkonstanten aufweist.

9. Verfahren nach Anspruch 7 oder 8,
wobei die dreidimensionale Struktur (50) zumindest zwei mikrofluidische Kavitäten (4) unterschiedlicher Größe und/oder Form und/oder Volumina aufweist.

10. Verfahren nach einem der vorangehenden Ansprüche, wobei die dreidimensionalen Struktur (50) ferner zumindest ein Führungselement (11) zur geführten Bewegung des zumindest einen optischen Elements (2) aufweist.

11. Verfahren nach einem der vorangehenden Ansprüche, wobei die dreidimensionale Struktur (50) mittels eines 3D-Lithografiesystems, insbesondere mittels eines 3D-Laser-Lithografiesystems, hergestellt wird, wobei das 3D-Laser-Lithografiesystem vorzugsweise auf einer Zwei-Photonen-Polymerisation eines UV-härtenden Fotolackes basiert.

12. Aktuierbare optische Vorrichtung (100), welche eine mit einem 3D-Drucker hergestellte dreidimensionale Struktur (50) umfasst, wobei die dreidimensionale Struktur (50) aufweist:
- zumindest ein optisches Element (2); und
- zumindest eine mikrofluidische Kavität (4), die mit einer magnetischen Substanz (6) befüllt ist;
wobei die dreidimensionale Struktur (50) auf ein Ende einer Faser (20) oder eines Faserbündels gedruckt ist, wobei die dreidimensionale Struktur (50) ferner eine Mikrospule (13) aufweist, und wobei die Mikrospule (13) derart angeordnet ist, dass sie zumindest bereichsweise die Faser (20) oder das Faserbündel umschließt.

13. Vorrichtung nach Anspruch 12, wobei die mikrofluidische Kavität (4) über eine Vielzahl von Bohrungen von aussen zugänglich ist.

14. Verwendung einer magnetischen Substanz (6), insbesondere eines magnetisierbaren Fluids, zur Herstellung einer magnetisch aktuierbaren optischen Vorrichtung (100), wobei die optische Vorrichtung (100) eine mit Hilfe eines 3D-Druckers ausgebildete dreidimensionale Struktur (50) mit zumindest einem optischen Element (2) und zumindest einer mikrofluidischen Kavität (4) aufweist, wobei die dreidimensionale Struktur (50) auf ein Ende einer Faser (20) oder eines Faserbündels gedruckt wird, wobei die dreidimensionale Struktur (50) ferner eine Mikrospule (13) aufweist, wobei die Mikrospule (13) derart angeordnet ist, dass sie zumindest bereichsweise die Faser (20) oder das Faserbündel umschließt, und wobei die magnetische Substanz (6) in die zumindest eine mikrofluidische Kavität (4) gefüllt wird.

## Claims

1. A method for manufacturing an actuatable optical device (100), comprising the steps:
- forming a three-dimensional structure (50) of the optical device (100) by means of a 3D printer such that the three-dimensional structure (50) comprises:
-- at least one optical element (2), and
-- at least one microfluidic cavity (4) for accommodating a magnetic substance (6);
- filling the at least one microfluidic cavity (4) with the magnetic substance (6);
wherein the three-dimensional structure (50) is printed on one end of a fiber (20) or a fiber bundle, wherein the three-dimensional structure (50) further comprises a microcoil (13), and wherein the microcoil (13) is arranged such that it encloses at least in some area the fiber (20) or the fiber bundle.

2. The method according to claim 1, wherein the magnetic substance (6) comprises a ferrofluid and/or a liquid polymer having magnetic and/or magnetizable micro- or nanoparticles.

3. The method according to claim 1 or 2, wherein the three-dimensional structure (50) further comprises:
-- at least one positioning means (8) for positioning the at least one optical element, wherein the at least one positioning means (8) comprises in particular a spring element (8a) and/or a suspension element (8e).

4. The method according to claim 3, wherein the positioning means (8) and the microfluidic cavity (4) are designed and arranged to bring the at least one optical element (2) into an adjusted position dependent on the magnetic field (B) as a result of an interaction of the magnetic substance (6) with an applied magnetic field (B).

5. The method according to any one of the preceding claims, wherein the at least one microfluidic cavity (4) is a component of the at least one optical element (2).

6. The method according to any one of the preceding claims, wherein the three-dimensional structure (50) further comprises a magnetizable sleeve (15), wherein the magnetizable sleeve (15) is arranged such that the magnetic sleeve (15) encloses the fiber (20) or the fiber bundle at least in some area, and wherein the microcoil (13) is arranged such that it encloses the magnetizable sleeve (15) at least in some area.

7. The method according to any one of the preceding claims, wherein the three-dimensional structure (50) comprises at least two optical elements (2).

8. The method according to claim 7,
wherein the three-dimensional structure (50) has at least two positioning means (8) with different spring constants.

9. The method according to claim 7 or 8,
wherein the three-dimensional structure (50) comprises at least two microfluidic cavities (4) of different size and/or shape and/or volumes.

10. The method according to any one of the preceding claims, wherein the three-dimensional structure (50) further comprises at least one guiding element (11) for guided movement of the at least one optical element (2).

11. The method according to any one of the preceding claims, wherein the three-dimensional structure (50) is produced by means of a 3D lithography system, in particular by means of a 3D laser lithography system, wherein the 3D laser lithography system is preferably based on a two-photon polymerization of a UV-curing photoresist.

12. An actuatable optical device (100) comprising a three-dimensional structure (50) produced with a 3D printer, wherein the three-dimensional structure (50) has:
- at least one optical element (2); and
- at least one microfluidic cavity (4) filled with a magnetic substance (6);
wherein the three-dimensional structure (50) is printed on one end of a fiber (20) or a fiber bundle, wherein the three-dimensional structure (50) further comprises a microcoil (13), and wherein the microcoil (13) is arranged to enclose at least in some area the fiber (20) or the fiber bundle.

13. The device according to claim 12, wherein the microfluidic cavity (4) is accessible from the outside via a plurality of bores.

14. Use of a magnetic substance (6), in particular a magnetizable fluid, for producing a magnetically actuatable optical device (100), wherein the optical device (100) has a three-dimensional structure (50) formed with the aid of a 3D printer with at least one optical element (2) and at least one microfluidic cavity (4), wherein the three-dimensional structure (50) is printed on one end of a fiber (20) or a fiber bundle, wherein the three-dimensional structure (50) further comprises a microcoil (13), wherein the microcoil (13) is arranged such that it encloses at least in some area the fiber (20) or the fiber bundle, and wherein the magnetic substance (6) is filled into the at least one microfluidic cavity (4).

## Revendications

1. Procédé de fabrication d'un dispositif optique actionnable (100), comprenant les étapes suivantes :
- la réalisation d'une structure tridimensionnelle (50) du dispositif optique (100) à l'aide d'une imprimante 3D de telle sorte que la structure tridimensionnelle (50) présente :
-- au moins un élément optique (2), et
-- au moins une cavité microfluidique (4) pour recevoir une substance magnétique (6) ;
- le remplissage de l'au moins une cavité microfluidique (4) avec la substance magnétique (6) ;
dans lequel la structure tridimensionnelle (50) est imprimée sur une extrémité d'une fibre (20) ou d'un faisceau de fibres, dans lequel la structure tridimensionnelle (50) présente en outre une microbobine (13), et dans lequel la microbobine (13) est agencée de telle sorte qu'elle entoure au moins par zones la fibre (20) ou le faisceau de fibres.

2. Procédé selon la revendication 1, dans lequel la substance magnétique (6) comprend un ferrofluide et/ou un polymère liquide présentant des micro- ou nanoparticules magnétiques et/ou magnétisables.

3. Procédé selon la revendication 1 ou 2, dans lequel la structure tridimensionnelle (50) présente en outre :
-- au moins un dispositif de positionnement (8) pour positionner l'au moins un élément optique, l'au moins un dispositif de positionnement (8) comprenant notamment un élément de ressort (8a) et/ou un élément de suspension (8e).

4. Procédé selon la revendication 3, dans lequel le dispositif de réglage (8) et la cavité microfluidique (4) sont conçus et agencés pour, suite à une interaction de la substance magnétique (6) avec un champ magnétique (B) appliqué, amener l'au moins un élément optique (2) dans une position de réglage dépendant du champ magnétique (B).

5. Procédé selon l'une quelconque des revendications précédentes, dans lequel l'au moins une cavité microfluidique (4) est un constituant de l'au moins un élément optique (2).

6. Procédé selon l'une quelconque des revendications précédentes, dans lequel la structure tridimensionnelle (50) présente en outre un manchon magnétisable (15), dans lequel le manchon magnétisable (15) est agencé de telle sorte que le manchon magnétique (15) entoure au moins par zones la fibre (20) ou le faisceau de fibres, et dans lequel la microbobine (13) est agencée de telle sorte qu'elle entoure au moins par zones le manchon magnétisable (15).

7. Procédé selon l'une quelconque des revendications précédentes, dans lequel la structure tridimensionnelle (50) présente au moins deux éléments optiques (2).

8. Procédé selon la revendication 7,
dans lequel la structure tridimensionnelle (50) présente au moins deux dispositifs de réglage (8) ayant des constantes de ressort différentes.

9. Procédé selon la revendication 7 ou 8,
dans lequel la structure tridimensionnelle (50) présente au moins deux cavités microfluidiques (4) de taille et/ou de forme et/ou de volumes différents.

10. Procédé selon l'une quelconque des revendications précédentes, dans lequel la structure tridimensionnelle (50) présente en outre au moins un élément de guidage (11) pour le mouvement guidé de l'au moins un élément optique (2).

11. Procédé selon l'une quelconque des revendications précédentes, dans lequel la structure tridimensionnelle (50) est fabriquée au moyen d'un système de lithographie 3D, notamment au moyen d'un système de lithographie laser 3D, dans lequel le système de lithographie laser 3D est de préférence basé sur une polymérisation à deux photons d'une laque photosensible durcissant aux UV.

12. Dispositif optique actionnable (100) comprenant une structure tridimensionnelle (50) fabriquée avec une imprimante 3D, la structure tridimensionnelle (50) présentant :
- au moins un élément optique (2) ; et
- au moins une cavité microfluidique (4) remplie d'une substance magnétique (6) ;
dans lequel la structure tridimensionnelle (50) est imprimée sur une extrémité d'une fibre (20) ou d'un faisceau de fibres, dans lequel la structure tridimensionnelle (50) présente en outre une microbobine (13), et dans lequel la microbobine (13) est agencée de telle sorte qu'elle entoure au moins par zones la fibre (20) ou le faisceau de fibres.

13. Dispositif selon la revendication 12, dans lequel la cavité microfluidique (4) est accessible de l'extérieur par l'intermédiaire d'une pluralité de trous.

14. Utilisation d'une substance magnétique (6), notamment d'un fluide magnétisable, pour la fabrication d'un dispositif optique (100) actionnable magnétiquement, dans laquelle le dispositif optique (100) présente une structure tridimensionnelle (50) réalisée à l'aide d'une imprimante 3D avec au moins un élément optique (2) et au moins une cavité microfluidique (4), dans laquelle la structure tridimensionnelle (50) est imprimée sur une extrémité d'une fibre (20) ou d'un faisceau de fibres, dans laquelle la structure tridimensionnelle (50) présente en outre une microbobine (13), dans laquelle la microbobine (13) est agencée de telle sorte qu'elle entoure au moins par zones la fibre (20) ou le faisceau de fibres, et dans laquelle la substance magnétique (6) remplit l'au moins une cavité microfluidique (4).
